# EUROPÄISCHE PATENTSCHRIFT

(11) **EP 1 251 537 B1**
(45) Veröffentlichungstag und Bekanntmachung des Hinweises auf die Patenterteilung: **05.05.2010**
(21) Anmeldenummer: 02004716.3
(22) Anmeldetag: 01.03.2002
(51) Int. Cl.: H01H 31/12, H02B 1/18

(54) **Sicherungslasttrennschalter in Leistenbauform**
Load break switch of the strip type with fuses
Disjoncteur-sectionneur à fusibles du type baguette

(30) Priorität: 21.04.2001 DE 10119611
(43) Veröffentlichungstag der Anmeldung: 23.10.2002
(73) Patentinhaber: EFEN GmbH, 65344 Eltville (DE)
(72) Erfinder: Kahler, Klaus Dietmar, 65321 Heidenrod (DE)
(74) Vertreter: Weber, Roland

(56) Entgegenhaltungen:
- DE-A- 3 800 809
- DE-U- 8 203 080
- DE-U- 9 416 753
- DE-U- 29 512 870
- DE-U- 29 908 804

## Beschreibung

Die vorliegende Erfindung betrifft einen Sicherungslasttrennschalter oder dergleichen in Leistenbauform zum Kontaktieren auf Stromsammelschienen, der eine Isolierstoffgrundplatte, Einspeisekontakte, die dafür vorgesehen sind, mit den Stromsammelschienen in Kontakt zu treten, und Abgangskontakte aufweist, wobei Aufnahmen für - die Abgangskontakte mit jeweils einem Einspeisekontakt verbindende - Sicherungseinsätze vorhanden sind, zumindest ein und vorzugsweise drei im wesentlichen U- oder L-förmige Kontakthaken zum Hintergreifen einer Sammelschiene an der Unterseite der Isolierstoffgrundplatte angeordnet ist bzw. sind und ein Schenkel des U- oder L-förmigen Kontakthakens in einer Öffnung in der Unterseite der Isolierstoffgrundplatte befestigt ist. Solche Sicherungslasttrennschalter in Leistenbauform, manchmal auch Sicherungsunterteile oder Lastschaltleisten genannt, sind seit langem bekannt. Üblicherweise beträgt der Abstand zwischen zwei Sammelschienen 100 mm. Bei Lastschaltleisten der Größe 00 beträgt der Mittenabstand der in einer Leiste befindlichen Sicherungseinsätze in Längsrichtung von Einsatz zu Einsatz ebenfalls 100 mm. Übliche Sicherungsunterteile oder Schaltleisten lassen sich ohne Schwierigkeiten an den Sammelschienen anbringen, da der Mittenabstand zwischen den Sicherungseinsätzen und der Sammelschienenmittenabstand gleich groß sind.

Es gibt jedoch auch Sammelschienensysteme, bei denen der Sammelschienenmittenabstand nicht 100 mm, sondern zum Beispiel 60 mm beträgt. Um nun ein Sicherungsunterteil mit einem Mittenabstand der in Längsrichtung angeordneten Sicherungseinsätze von 100 mm auf ein Sammelschienensystem mit beispielsweise 60 mm Schienenabstand aufzubringen, wird meist eine zusätzliche Adaptereinrichtung zwischen Sammelschienen einerseits und Unterteil bzw. Schaltleiste andererseits angeordnet. Diese Befestigungsmethode hat jedoch den Nachteil, daß der Sicherungslasttrennschalter in Leistenbauform durch den Adapter deutlich höher baut, so daß in den Schalt- und Verteilerschränken eine größere Einbautiefe vorgesehen sein muß. Auch ist die Montage mit größerem Aufwand verbunden.

Bereits in der DE 94 16 753 U1 ist eine Sammelschienenkontaktierung und -befestigung von NH-Sicherungslasttrenngeräten beschrieben, bei der eine Lasttrennleiste der NH-Größe 00 auf ein Sammelschienensystem mit Mittenabstand 60 mm montierbar ist, ohne daß die Einbautiefe vergrößert wird. Zu diesem Zweck weist die Schaltleiste, die in dieser Schrift offenbart wird, an ihrer Unterseite einen Kontakthaken auf, der eine Stromsammelschiene hintergreift. Weiterhin sind zwei Schienenkontakte vorgesehen, die durch eine Zwangsfederung mittels einer Druckfeder an die anderen Sammelschienen angepreßt werden. Diese Schaltleiste ist jedoch nur für ganz bestimmte Sammelschienenbreiten oder -dicken vorgesehen und kann daher nicht ohne weiteres für andere Sammelschienenbreiten oder -dicken verwendet werden. Zudem ist diese Schaltleiste aufwendig gestaltet und daher in der Herstellung sehr teuer.

Ferner offenbart das Dokument DE 3 800 809 A1 einen Sicherungslasttrennschalter gemäß dem Oberbegriff des Anspruchs 1.

Der vorliegenden Erfindung liegt die Aufgabe zugrunde, einen Sicherungslasttrennschalter in Leistenbauform zur Verfügung zu stellen, der kostengünstig herstellbar ist, einfach montierbar ist, für verschiedene Sammelschienenbreiten und -dicken geeignet ist und der einen Kabelabgang in der einen und wahlweise in der entgegengesetzten Richtung erlaubt.

Erfindungsgemäß wird diese Aufgabe durch einen Sicherungslasttrennschalter der eingangs erwähnten Art gelöst, bei dem zumindest ein Einspeisekontakt einen in etwa senkrecht zu der Isolierstoffgrundplatte verlaufenden Anschlußarm sowie zwei sich im wesentlichen senkrecht von dem Anschlußarm in entgegengesetzte Richtungen erstreckende Kontaktschenkelabschnitte aufweist und für zumindest einen Kontakthaken in der Unterseite der Isolierstoffgrundplatte zumindest zwei Befestigungsöffnungen vorgesehen sind, die in Längsrichtung des Sicherungslasttrennschalters voneinander beabstandet sind, so daß die Kontakthaken in zwei Positionen angeordnet werden können, wobei in der einen Position sich der freie Schenkel des Kontakthakens in Längsrichtung des Sicherungslasttrennschalters in Richtung eines Anschlußabschnittes erstreckt und in der anderen Position sich der freie Schenkel in die entgegengesetzte Richtung erstreckt.

Durch die Anordnung des einen bzw. der drei Kontakthaken an der Unterseite der Isolierstoffgrundplatte, die dafür vorgesehen sind, eine Sammelschiene zu hintergreifen, kann der Sicherungslasttrennschalter leicht an den Sammelschienen befestigt werden. Durch die zumindest zwei Befestigungsöffnungen in der Unterseite der Isolierstoffgrundplatte für die Kontakthaken, die in Längsrichtung des Trennschalters voneinander beabstandet sind, können die Kontakthaken in unterschiedlichen Positionen an der Unterseite des Trennschalters befestigt werden, so daß der Kabelabgang leicht von der einen Seite auf die gegenüberliegende Seite umgerüstet werden kann. Die Kontakthaken lassen sich vorzugsweise in den Befestigungsöffnungen in zwei verschiedenen Positionen befestigen, so daß in der einen Position der freie Schenkel des U- oder L-förmigen Kontakthakens in Richtung des Anschlußabschnittes des Trennschalters zeigt und in der anderen Position der freie Schenkel in die entgegengesetzte Richtung zeigt. Bei einer besonders bevorzugten Ausführungsform weist der Trennschalter einen Anschlußabschnitt auf, an dem die einzelnen Anschlüsse für die Abgangskontakte liegen.

Durch die neue Erfindung ist es mit Vorteil möglich, Sicherungslasttrennschalter in Leistenbauform kostengünstig herzustellen und auch auf ein Sammelschienensystem mit 60 mm Schienenabstand aufzubringen, obgleich der Sicherungslasttrennschalter in Längsrichtung hintereinander angeordnete Sicherungseinsätze mit einem Mittenabstand von 100 mm hat. Die Eignung des neuen Sicherungslasttrennschalters für verschiedene Sammelschienenbreiten und -dicken gelingt unter anderem durch den Einsatz der Kontakthaken, in welche ersichtlich also Sammelschienen unterschiedlicher Breiten und Dicken eingeklemmt werden können. Dieses Einklemmen erfolgt zwischen dem freien Schenkel des U- oder L-förmigen Kontakthakens einerseits und dem Kontaktschenkelabschnitt andererseits.

Ist für einen Kabelabgang in der einen Richtung der Einsatz der Kontakthaken in den betreffenden Befestigungsöffnungen für eine erste ausgewählte Position vorgenommen, dann müssen in dieser Position für alle Einspeisekontakte passend umgebogene Kontaktschenkelabschnitte vorliegen, um die Oberflächen aller drei Sammelschienen mit den drei Kontaktschenkelabschnitten in Kontakt zu bringen. Wählt man aber zu einem anderen Zeitpunkt eine zweite Position aus, bei welcher der Kabelabgang in der entgegengesetzten Richtung gewünscht wird, dann müssen die Kontakthaken in der beschriebenen Weise umgesetzt werden. Wenigstens bei einem der drei Einspeisekontakte wird die soeben beschriebene Bedingung, zwei die Sammelschiene umgreifende Klemmteile vorzusehen, mit Vorteil dadurch erreicht, daß zumindest der eine Einspeisekontakt zwei Kontaktschenkelabschnitte aufweist, die sich senkrecht zu dem Anschlußarm erstrecken und sich außerdem in entgegengesetzte Richtungen von dem Anschlußarm erstrecken. Durch diese Maßnahme ist also auch für die zweite Position ein Kontaktschenkelabschnitt am Einspeisekontakt vorgesehen, der genau passend auf die Stromsammelschiene aufgesetzt und mittels des Kontakthakens festgeklemmt werden kann. Der Hersteller des neuen Sicherungslasttrennschalters hat also den Vorteil, daß er auf Kundenwunsch den Kabelabgang in der einen oder wahlweise auch in der entgegengesetzten Richtung einfach anordnen kann.

Dadurch, daß zwei sich in entgegengesetzte Richtungen und in Längsrichtung des Sicherungslasttrennschalters erstreckende Kontaktschenkelabschnitte vorgesehen sind, ist gewährleistet, daß auch bei unterschiedlichen Sammelschienenbreiten und -dicken immer die Sammelschiene entlang ihrer gesamten Breite mit den Kontaktschenkelabschnitten Kontakt hat. Insbesondere dann, wenn der Mittenabstand der verwendeten Sicherungseinsätze von dem Mittenabstand der Sammelschienen abweicht, ist der vorgeschlagene Einspeisekontakt von besonderem Vorteil.

In einer besonders einfach herstellbaren Ausführungsform ist vorgesehen, daß bei dem zumindest einen Einspeisekontakt der Anschlußarm und der erste Kontaktschenkelabschnitt einstückig, vorzugsweise als Stanzbiegeteil, ausgebildet sind. Mit Vorteil weist der zweite Kontaktschenkelabschnitt einen um etwa 90° abgewinkelten Befestigungsschenkel auf, mit dem der zweite Kontaktschenkelabschnitt an dem Anschlußarm befestigt ist. Dieser Einspeisekontakt wird daher zweiteilig hergestellt. Zunächst wird der Anschlußarm und der erste Kontaktschenkelabschnitt aus einem Stanzbiegeteil einstückig hergestellt. Danach wird der zweite Kontaktschenkelabschnitt mit dem abgewinkelten Befestigungsschenkel, vorzugsweise ebenfalls als Stanzbiegeteil, hergestellt. Schließlich wird der Befestigungsschenkel des zweiten Kontaktschenkelabschnitts an dem Anschlußarm befestigt, so daß der erfindungsgemäße Einspeisekontakt dieser Ausführungsform entsteht.

Bei den hier vorgeschlagenen Ausführungsformen weist der Anschlußarm einen Aufnahmeabschnitt zur Aufnahme eines Kontaktmessers eines Sicherungseinsatzes auf. Dadurch ist gewährleistet, daß zwischen dem Kontaktschenkelabschnitt, der im eingesetzten Zustand mit der Sammelschiene in Kontakt tritt, und dem Aufnahmeabschnitt zur Aufnahme eines Kontaktmessers keine unerwünschten Übergangswiderstände auftreten, da Aufnahmeabschnitt, Anschlußarm und der eine Kontaktschenkelabschnitt einstückig hergestellt sind.

In einer besonders zweckmäßigen Ausführungsform sind die Kontaktschenkelabschnitte in Ausnehmungen in der Isolierstoffgrundplatte angeordnet, wobei die Kontaktschenkelabschnitte vorzugsweise bündig mit der Unterseite der Isolierstoffgrundplatte abschließen. Dadurch, daß die Kontaktschenkelabschnitte in Ausnehmungen in der Isolierstoffgrundplatte angeordnet sind, wird erreicht, daß die Kontaktschenkelabschnitte sauber und richtig in der Isolierstoffgrundplatte gehalten sind.

Dadurch, daß die Kontaktschenkelabschnitte bündig mit der Unterseite der Isolierstoffgrundplatte abschließen, ist eine leichte Montage möglich, da keine vorstehenden Teile das Einsetzen des Trennschalters auf den Sammelschienen behindert.

Es ist weiterhin vorteilhaft, wenn alle Einspeisekontakte einen Anschlußarm und mindestens einen sich im wesentlichen senkrecht zu dem Anschlußarm erstreckenden Kontaktschenkelabschnitt aufweisen und vorzugsweise als Stanzbiegeteil ausgebildet sind. Während es bei vielen Ausführungsformen möglich ist, zwei der drei Einspeisekontakte mit nach einer Seite umgebogenen und entsprechend lang ausgebildeten Kontaktschenkelabschnitten zu versehen, wird der dritte Einspeisekontakt die erwähnten zwei Kontaktschenkelabschnitte haben müssen, die sich zwar auch im wesentlichen senkrecht zu dem Anschlußarm erstrecken, die sich aber außerdem in entgegengesetzte Richtungen zueinander von dem Anschlußarm erstrecken. Dadurch kann man, wie oben schon erwähnt, für unterschiedliche Sammelschienenbreiten und -dicken wahlweise den Kabelabgang in der einen oder in der entgegengesetzten Richtung vorsehen, denn in jeder der beiden Positionen der Kontakthaken liegen dann die notwendigen Kontaktschenkelabschnitte vor, gegen welche die Sammelschienen mittels der Kontakthaken mechanisch festgeklemmt werden.

Erfindungsgemäß ist es weiterhin günstig, wenn bei einer anderen Ausführungsform der Anschlußarm und beide Kontaktschenkelabschnitte aus einem Stück bestehen. Dies kann z.B. dadurch erreicht werden, daß der Anschlußarm (mit seinem Aufnahmeabschnitt) an seinem unteren bzw. hinteren, den Stromsammelschienen zugewandten Ende um 90° umgeknickt wird, um ein Übergangsstück zu bilden, welches dann an seinem freien Ende noch einmal um 180° zurückgebogen wird und damit die zwei Kontaktschenkelabschnitte vorsieht. Die Ebene der Kontaktschenkelabschnitte liegt senkrecht zum Anschlußarm und parallel zur Ebene des Übergangsstückes. Eine gedachte Grenzlinie zwischen den zwei Kontaktschenkelabschnitten liegt unter dem Anschlußarm, dessen Ebene man sich verlängert vorstellen kann und dessen Ebene durch die gedachte Trennlinie zwischen den zwei Kontaktschenkelabschnitten verläuft. Diese einstückige Ausgestaltung des Anschlußarms und der beiden Kontaktschenkelabschnitte erlaubt ein besseres elektrisches Verhalten, weil die Übergangswiderstände günstiger sind. Der Hersteller eines solchen Sicherungslasttrennschalters wird die zuletzt beschriebene Ausführungsform der zuvor beschriebenen vorziehen, wenn er entsprechende Fertigungseinrichtungen hat, z.B. einen Stanzbiegeautomat. Dann kann er einen solchen Einspeisekontakt leicht und preiswert produzieren.

Weitere Vorteile, Merkmale und Anwendungsmöglichkeiten werden deutlich anhand der folgenden Beschreibung einer bevorzugten Ausführungsform sowie der beigefügten Figuren. Es zeigen:
- Figur 1: eine Schnittansicht eines Schnittes entlang der Längsrichtung des Sicherungslasttrennschalters mit einer ersten Kontakthakenanordnung,
- Figur 2: eine Schnittansicht ähnlich der in Figur 1 mit eingesetzten Sicherungseinsätzen,
- Figuren 3a und 3b: eine Schnittansicht sowie eine perspektivische Ansicht eines erfindungsgemäßen Einspeisekontaktes einer ersten Ausführungsform,
- Figur 4: eine Schnittansicht ähnlich der in Figur 4 mit einer zweiten Kontakthakenanordnung,
- Figur 5: eine perspektivische Ansicht einer zweiten Ausführungsform eines Einspeisekontaktes, der einstückig ausgebildet ist, und
- Figur 6: eine Seitenansicht der zweiten Ausführungsform des Einspeisekontaktes.

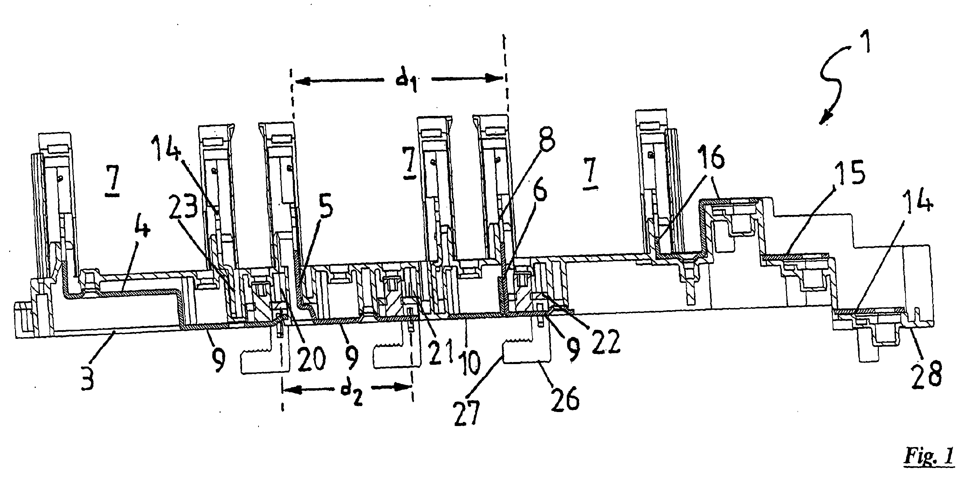

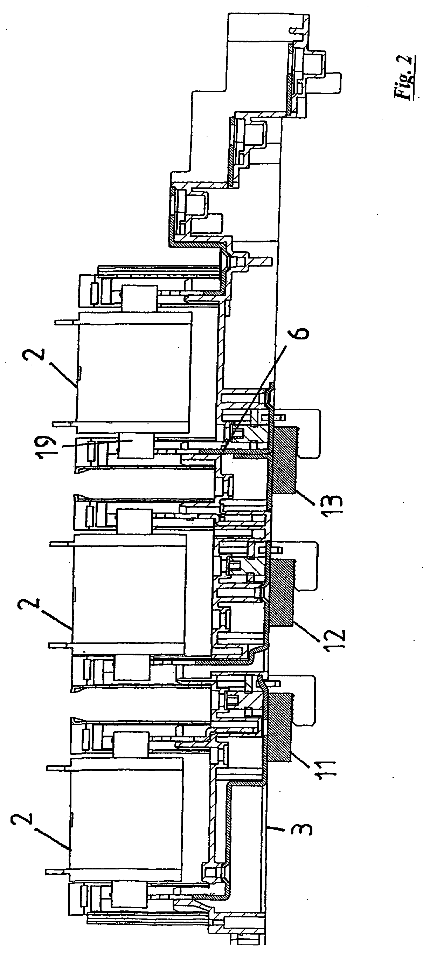

In Figur 1 ist eine besondere Ausführungsform des erfindungsgemäßen Sicherungslasttrennschalters 1 gezeigt. Der Sicherungslasttrennschalter 1 weist eine Isolierstoffgrundplatte 3 sowie Einspeisekontakte 4, 5, 6 auf, die dafür vorgesehen sind, mit den Stromsammelschienen 11, 12, 13 in Kontakt zu treten. Des weiteren sind Abgangskontakte 14, 15, 16 vorgesehen. Zwischen den Einspeisekontakten 4, 5, 6 und den Abgangskontakten 14, 15, 16 sind Aufnahmen 7 für Sicherungseinsätze 2 vorgesehen. Werden, wie in Figur 2 gezeigt ist, die Sicherungseinsätze 2 in die Aufnahmen 7 eingesetzt, so führt dies dazu, daß die Abgangskontakte 14, 15, 16 jeweils einen abgesicherten Abgriff für die einzelnen Stromsammelschienen 11, 12, 13 darstellen. Der Verlauf der Abgangskontakte 14, 15, 16 ist in Figur 1 nur für den Abgangskontakt 16 der rechten Aufnahme 7 vollständig gezeigt. Die Abgangskontakte 14, 15 der linken und mittleren Aufnahme 7 werden zunächst aus der Schnittebene herausgeführt und dann parallel zu der Schnittebene bis in den Anschlußabschnitt 28 des Adapters 1 geführt. Der Abstand d₁ zwischen benachbarten Sicherungseinsätzen 2 beträgt 100 mm. Der gezeigte Sicherungslasttrennschalter ist daher für Sicherungseinsätze der Größe NH 00 vorgesehen.

Die Einspeisekontakte 4, 5, 6 weisen jeweils Kontaktschenkelabschnitte 9, 10 auf, die an der Unterseite der Isolierstoffgrundplatte 3 angeordnet sind. Die Kontaktschenkelabschnitte 9, 10 schließen mit der Unterseite der Isolierstoffgrundplatte 3 bündig ab.

In Ausnehmungen 20, 21, 22 in der Isolierstoffgrundplatte 3 sind des weiteren Kontakthaken 26 vorgesehen. Diese Kontakthaken 26 dienen dazu, wie in Figur 2 zu sehen ist, die Stromsammelschienen 11, 12, 13 zu hintergreifen, um den Sicherungslasttrennschalter 1 sicher mit den Stromsammelschienen 11, 12, 13 zu verbinden.

Der Abstand d₂ von Kontakthaken 26 zu Kontakthaken 26 beträgt in der dargestellten Ausführungsform 60 mm, so daß dieser Sicherungslasttrennschalter für Sammelschienen mit einem Mittenabstand von 60 mm vorgesehen ist.

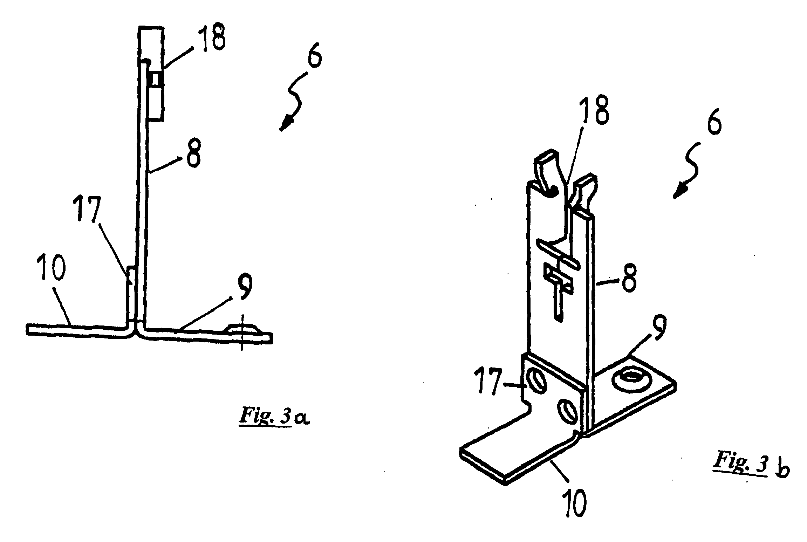

Die Einspeisekontakte 4, 5, 6 weisen jeweils einen Anschlußarm 8 sowie einen Kontaktschenkelabschnitt 9 auf. Der Anschlußarm 8 ist im wesentlichen senkrecht zu der Unterseite der Isolierstoffgrundplatte 3 angeordnet. Die Kontaktschenkelabschnitte 9 verlaufen hingegen parallel zu der Unterseite der Isolierstoffgrundplatte 3. Deutlich zu erkennen ist, daß der Einspeisekontakt 6 der rechten Aufnahme 7 in den Figuren 1, 2 und 4, welcher in den Figuren 3a und 3b noch einmal größer dargestellt ist, einen weiteren Kontaktschenkelabschnitt 10 aufweist, der sich in entgegengesetzter Richtung zu dem ersten Kontaktschenkelabschnitt 9 erstreckt. Dies hat zur Folge, wie in Figur 2 besonders deutlich zu erkennen ist, daß die Sammelschiene 13 entlang ihrer gesamten Oberseite mit einem der Kontaktschenkelabschnitte 9 oder 10 in Kontakt ist.

Der zweite Kontaktschenkelabschnitt 10 der ersten Ausführungsform weist einen um etwa 90° abgewinkelten Befestigungsschenkel 17 auf, der Bohrungen aufweist, so daß er an den Anschlußarm 8 des Einspeisekontakts 6 genietet, geschraubt oder auf andere geeignete Weise mit diesem verbunden werden kann.

Die Kontaktschenkelabschnitte der Einspeisekontakte 4, 5, 6 bilden jeweils eine Kontaktfläche, die in Längsrichtung, d.h. in Schnittrichtung der Figuren 1, 2 und 3 eine Länge von etwa 40 bis 50 mm hat.

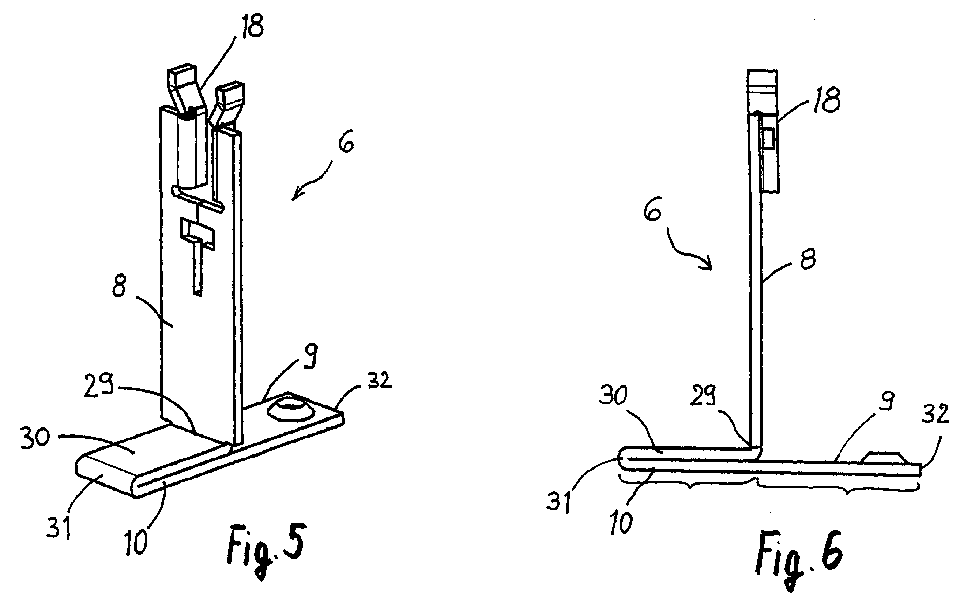

Die Figuren 5 und 6 zeigen die zweite Ausführungsform eines Einspeisekontaktes 6. Man erkennt wieder den Anschlußarm 8 mit dem oben befindlichen Aufnahmeabschnitt 18 zum Einstecken der Kontaktmesser des Sicherungseinsatzes. Auf der gegenüberliegenden unteren Seite ist bei dieser zweiten Ausführungsform des Einspeisekontaktes 6 eine erste Knicklinie 29 gezeigt, um die herum bei der Herstellung dieses Einspeisekontaktes 6 das Blech um 90° unter Bildung des Übergangsstückes 30 aus der Hauptebene des Anschlußarms 8 herausgeknickt ist. Um die freie Endkante 31 des Übergangsstückes 30 wird das Blech danach nochmals um 180° so herumgebogen, daß die beiden Abschnitte des Bleches parallel und flach aufeinanderliegen. Dabei bildet das untere Blech die beiden Kontaktschenkelabschnitte 10 und 9. Der Kontaktschenkelabschnitt 10 liegt flach, parallel auf dem Übergangsstück 30 (bzw. unter diesem) und setzt sich weiter zu dem Kontaktschenkelabschnitt 9 mit der angedeuteten Befestigung fort. Der Kontaktschenkelabschnitt 9 endet in der freien Kante 32.

In Figur 6 ist gezeigt, wie das untere Blechstück mit den Kontaktschenkelabschnitten 9 und 10 in etwa zwei Hälften unterteilt ist, welche durch geschweifte Klammern angedeutet sind. Im Bereich der rechten geschweiften Klammer liegt also der Kontaktschenkelabschnitt 9, und im Bereich der linken geschweiften Klammer liegt der Kontaktschenkelabschnitt 10. Die gedachte Trennlinie dazwischen liegt unter dem Anschlußarm 8 und würde sich ergeben, wenn man eine durch den Anschlußarm 8 gelegte Ebene nach unten so verlängert, daß diese die Ebene der Kontaktschenkelabschnitte 9 und 10 durchstößt.

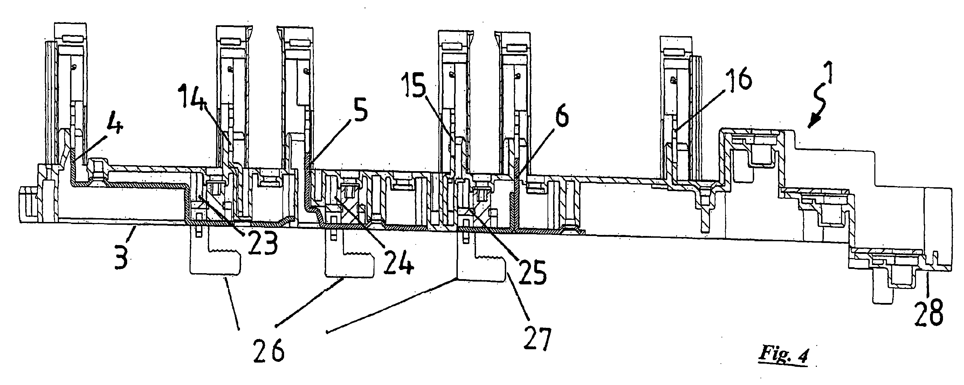

Neben den Befestigungsöffnungen 20, 21 und 22 in der Isolierstoffgrundplatte 3, in welche die Kontakthaken eingeschraubt sind, sind noch weitere Befestigungsöffnungen 23, 24, 25 vorgesehen, in die, wie in Figur 4 gezeigt ist, die Kontakthaken wahlweise eingeschraubt werden können.

Vergleicht man Figur 1 mit Figur 4, so wird deutlich, daß der freie Schenkel 27 des Kontakthakens 26 einmal in Richtung des Anschlußabschnitts 28 des Sicherungslasttrennschalters 1 gerichtet ist (Figur 4) und einmal in entgegengesetzter Richtung ausgerichtet ist (Figur 1). Dies hat den Vorteil, daß beispielsweise im Falle von waagerecht übereinander angeordneten Sammelschienen, bei dem die Kontakthaken von oben die Sammelschienen hintergreifen, der Anschlußabschnitt sowohl nach oben als auch nach unten zeigen kann, was die Flexibilität des Sicherungslasttrennschalters weiter erhöht. Für beide Lagen des Anschlußabschnittes hintergreifen die Kontakthaken die Sammelschienen also mit Vorteil immer von oben. Auf diese Weise ist also ein Kabelabgang in der einen und wahlweise in der entgegengesetzten Richtung möglich.

### Bezugszeichenliste:

- 1: Sicherungslasttrennschalter
- 2: Sicherungseinsatz
- 3: Isolierstoffgrundplatte
- 4, 5, 6: Einspeisekontakt
- 7: Aufnahme
- 8: Anschlußarm
- 9, 10.: Kontaktschenkelabschnitt
- 11, 12, 13: Stromsammelschiene
- 14, 15, 16: Abgangskontakt
- 17: Befestigungsschenkel
- 18: Aufnahmeabschnitt
- 19: Kontaktmesser
- 20, 21, 22: erste Ausnehmung
- 23, 24, 25: zweite Ausnehmung
- 26: Kontakthaken
- 27: freier Schenkel des L- oder U-förmigen Kontakthakens
- 28: Anschlußabschnitt
- 29: erste Knicklinie
- 30: Übergangsstück
- 31: freie Endkante
- 32: freie Endkante des Kontaktschenkelabschnitts 9

## Patentansprüche

1. Sicherungslasttrennschalter in Leistenform zum Kontaktieren auf Stromsammelschienen (11, 12, 13), der eine Isolierstoffgrundplatte (3), Einspeisekontakte (4, 5, 6), die dafür vorgesehen sind, mit den Stromsammelschienen (11, 12, 13) in Kontakt zu treten, und Abgangskontakte (14, 15, 16) aufweist, wobei Aufnahmen (7) für Sicherungseinsätze (2) vorhanden sind, welche die Abgangskontakte (14, 15, 16) mit jeweils einem Einspeisekontakt (4, 5, 6) verbinden, zumindest ein und vorzugsweise drei im wesentlichen U- oder L-förmige Kontakthaken (26) zum Hintergreifen einer Sammelschiene (11, 12, 13) an der Unterseite der Isolierstoffgrundplatte (3) angeordnet ist bzw. sind und ein Schenkel des U- oder L-förmigen Kontakthakens (26) in einer Öffnung (20, 21, 22) in der Unterseite der Isolierstoffgrundplatte (3) befestigt ist, wobei für zumindest einen Kontakthaken (26) in der Unterseite der Isolierstoffgrundplatte (3) zumindest zwei Befestigungsöffnungen (20, 21, 22, 23, 24, 25) vorgesehen sind, die in Längsrichtung des Sicherungslasftrennschalters (1) voneinander beabstandet sind, so daß die Kontakthaken (26) in zwei Positionen angeordnet werden können, **dadurch gekennzeichnet, daß** zumindest ein Einspeisekontakt (6) einen in etwa senkrecht zu der isolierstoffgrundplatte (3) verlaufenden Anschlußarm (8) sowie zwei sich im wesentlichen senkrecht zu dem Anschlußarm (8) in entgegengesetzte Richtungen erstreckende Kontaktschenkelabschnitte (9, 10) aufweist, die dafür vorgesehen sind, mit den Stromsammelschienen (11, 12, 13) in Kontakt zu treten, und in der einen Position sich der freie Schenkel (27) des Kontakthakens (26) in Längsrichtung des Sicherungslasttrennschalters (1) in Richtung eines Anschlußabschnittes (28) erstreckt und in der anderen Position sich der freie Schenkel in die entgegengesetzte Richtung erstreckt.

2. Sicherungslasttrennschalter nach Anspruch 1, **dadurch gekennzeichnet, daß** bei dem zumindest einen Einspeisekontakt (6) der Anschlußarm (8) und der erste Kontaktschenkelabschnitt (9) einstückig, vorzugsweise als Stanzbiegeteil, ausgebildet sind.

3. Sicherungslasttrennschalter nach Anspruch 2, **dadurch gekennzeichnet, daß** der zweite Kontaktschenkelabschnitt (10) einen um etwa 90° abgewinkelten Befestigungsschenkel (17) aufweist, mit dem der zweite Kontaktschenkelabschnitt (10) an dem Anschlußarm (8) befestigt ist.

4. Sicherungslasttrennschalter nach einem der Ansprüche 1 bis 3, **dadurch gekennzeichnet, daß** die Kontaktschenkelabschnitte (9, 10) in Ausnehmungen in der Isolierstoffgrundplatte (3) angeordnet sind und vorzugsweise bündig mit der Unterseite der Isolierstoffgrundplatte (3) abschließen.

5. Sicherungslasttrennschalter nach einem der Ansprüche 1 bis 4, **dadurch gekennzeichnet, daß** alle Einspeisekontakte (4, 5, 6) einen Anschlußarm (8) und mindestens einen sich im wesentlichen senkrecht zu dem Anschlußarm (8) erstreckenden Kontaktschenkelabschnitt (9) aufweisen.

6. Sicherungslasttrennschalter nach einem der Ansprüche 1 oder 2, **dadurch gekennzeichnet, daß** der Anschlußarm (18) und beide Kontaktschenkelabschnitte (9, 10) aus einem Stück bestehen.

7. Sicherungslasttrennschalter nach einem der Ansprüche 1 bis 6, **dadurch gekennzeichnet, daß** der Mittenabstand (d₁) zwischen den Aufnahmen (7) für die Sicherungseinsätze (2) größer als der Abstand (d₂) der Kontakthaken (26) ist.

## Claims

1. A safety load-break switch in strip form for contacting on bus bars (11, 12, 13), having an insulating base plate (3), feed contacts (4, 5, 6) provided for coming into contact with the bus bars (11, 12, 13), and output contacts (14, 15, 16), wherein there are provided receiving means (7) for fuse inserts (2) which connect the output contacts (14, 15, 16) to a respective feed contact (4, 5, 6), at least one and preferably three substantially U-shaped or L-shaped contact hooks (26) for engaging behind a bus bar (11, 12, 13) is or are arranged at the underside of the insulating base plate (3) and a limb of the U-shaped or L-shaped contact hook (26) is fixed in an opening (20, 21, 22) in the underside of the insulating base plate (3), wherein provided for at least one contact hook (26) in the underside of the insulating base plate (3) are at least two fixing openings (20, 21, 22, 23, 24, 25) which are spaced from each other in the longitudinal direction of the safety load-break switch (1) so that the contact hooks (26) can be arranged in two positions, **characterised in that** at least one feed contact (6) has a connection arm (8) extending substantially perpendicularly to the insulating base plate (3) and two contact limb portions (9, 10) extending substantially perpendicularly to the connection arm (8) in opposite directions, which are provided for coming into contact with the bus bars (11, 12, 13), and in the one position the free limb (27) of the contact hook (26) extends in the longitudinal direction of the safety load-break switch (1) in the direction of a connection portion (28) and in the other position the free limb extends in the opposite direction.

2. A safety load-break switch according to claim 1 **characterised in that** in regard to the at least one feed contact (6) the connection arm (8) and the first contact limb portion (9) are formed in one piece, preferably in the form of a stamped bent portion.

3. A safety load-break switch according to claim 2 **characterised in that** the second contact limb portion (10) has a fixing limb (17) which is angled through about 90° and with which the second contact limb portion (10) is fixed to the connection arm (8).

4. A safety load-break switch according to one of claims 1 to 3 **characterised in that** the contact limb portions (9, 10) are arranged in openings in the insulating base plate (3) and preferably terminate flush with the underside of the insulating base plate (3).

5. A safety load-break switch according to one of claims 1 to 4 **characterised in that** all feed contacts (4, 5, 6) have a connection arm (8) and at least one contact limb portion (9) extending substantially perpendicularly to the connection arm (8).

6. A safety load-break switch according to one of claims 1 and 2 **characterised in that** the connection arm (18) and both contact limb portions (9, 10) consist of one piece.

7. A safety load-break switch according to one of claims 1 to 6 **characterised in that** the centre spacing (d₁) between the receiving means (7) for the fuse inserts (2) is greater than the spacing (d₂) of the contact hooks (26).

## Revendications

1. Sectionneur de charge de sécurité sous forme de barre pour la mise en contact sur des barres omnibus (11, 12, 13) et comprenant une plaque de base en matière isolante (3), des contacts d'alimentation (4, 5, 6) prévus pour entrer en contact avec les barres omnibus (11, 12, 13), et des contacts de sortie (14, 15, 16), des logements (7) pour des cartouches fusibles (2) reliant les contacts de sortie (14, 15, 16) à chaque contact d'alimentation (4, 5, 6) étant présents, au moins un et de préférence trois crochets de contact (26) sensiblement en forme de U ou de L et destinés à venir se plaquer sur l'arrière d'une barre omnibus (11, 12, 13) étant disposés sur la face inférieure de la plaque de base en matière isolante (3) et une branche du crochet de contact (26) en forme de U ou de L étant fixée dans une ouverture (20, 21, 22) dans la face inférieure de la plaque de base en matière isolante (3), au moins deux ouvertures de fixation (20, 21, 22, 23, 24, 25) espacées l'une de l'autre dans la direction longitudinale du sectionneur de charge de sécurité (1) étant prévues pour au moins un crochet de contact (26) dans la face inférieure de la plaque de base en matière isolante (3), de sorte que les crochets de contact (26) puissent être disposés dans deux positions, **caractérisé en ce qu'**au moins un contact d'alimentation (6) comprend un bras de raccordement (8) s'étendant à peu près perpendiculairement à la plaque de base en matière isolante (3) ainsi que deux parties de branches de contact (9, 10) s'étendant sensiblement perpendiculairement au bras de raccordement (8) dans des directions opposées et prévues pour entrer en contact avec les barres omnibus (11, 12, 13) et dans l'une des positions la branche libre (27) du crochet de contact (26) dans la direction longitudinale du sectionneur de charge de sécurité (1) s'étend en direction d'une partie de raccordement (28) et dans l'autre position la branche libre s'étend dans la direction opposée.

2. Sectionneur de charge de sécurité selon la revendication 1, **caractérisé en ce que** pour le ou les contacts d'alimentation (6), le bras de raccordement (8) et la première partie de branche de contact (9) sont conçus d'une seule pièce, de préférence comme une pièce flexible estampée.

3. Sectionneur de charge de sécurité selon la revendication 2, **caractérisé en ce que** la seconde partie de branche de contact (10) comprend une branche de fixation (17) coudée d'environ 90° par laquelle la seconde partie de branche de contact (10) est fixée sur le bras de raccordement (8).

4. Sectionneur de charge de sécurité selon l'une quelconque des revendications 1 à 3, **caractérisé en ce que** les parties de branche de contact (9, 10) sont disposées dans des évidements dans la plaque de base en matière isolante (3) et se terminent de préférence au même niveau que la face inférieure de la plaque de base en matière isolante (3).

5. Sectionneur de charge de sécurité selon l'une quelconque des revendications 1 à 4, **caractérisé en ce que** tous les contacts d'alimentation (4, 5, 6) comprennent un bras de raccordement (8) et au moins une partie de branche de contact (9) s'étendant sensiblement perpendiculairement au bras de raccordement (8).

6. Sectionneur de charge de sécurité selon l'une quelconque des revendications 1 ou 2, **caractérisé en ce que** le bras de raccordement (18) et les deux parties de branche de contact (9, 10) sont constitués d'une seule pièce.

7. Sectionneur de charge de sécurité selon l'une quelconque des revendications 1 à 6, **caractérisé en ce que** l'écart moyen (d₁) entre les logements (7) pour les cartouches fusibles (2) est supérieur à l'écart (d₂) entre les crochets de contact (26).
